(19) Europäisches Patentamt
European Patent Office
Office européen des brevets

(11) **EP 1 285 537 B1**

(12) **EUROPÄISCHE PATENTSCHRIFT**

(45) Veröffentlichungstag und Bekanntmachung des Hinweises auf die Patenterteilung:
**23.02.2005   Patentblatt 2005/08**

(51) Int Cl.$^7$: **H04N 7/26**

(21) Anmeldenummer: **01943016.4**

(22) Anmeldetag: **03.05.2001**

(86) Internationale Anmeldenummer:
**PCT/DE2001/001688**

(87) Internationale Veröffentlichungsnummer:
**WO 2001/086958 (15.11.2001 Gazette 2001/46)**

(54) **VERFAHREN UND EINE ANORDNUNG ZUR CODIERUNG BZW. DECODIERUNG EINER FOLGE VON BILDERN**

METHOD AND AN ARRANGEMENT FOR THE CODING AND DECODING OF A SERIES OF IMAGES

PROCEDE ET AGENCEMENT POUR LE CODAGE ET LE DECODAGE D'UNE SUITE D'IMAGES

(84) Benannte Vertragsstaaten:
**DE FR GB**

(30) Priorität: **08.05.2000  DE 10022262**

(43) Veröffentlichungstag der Anmeldung:
**26.02.2003   Patentblatt 2003/09**

(73) Patentinhaber: **Siemens Aktiengesellschaft 80333 München (DE)**

(72) Erfinder:
• **BLÄTTERMANN, Gabi**
**13187 Berlin (DE)**
• **MARPE, Detlev**
**12161 Berlin (DE)**

(56) Entgegenhaltungen:
EP-A- 0 441 168          WO-A-00/05898
WO-A-98/53613          US-A- 5 764 802
US-A- 5 995 150

• **BOSVELD F ET AL: "PERFORMANCE EVALUATION OF HIERARCHICAL CODING SCHEMES FOR HDTV" SIGNAL PROCESSING THEORIES AND APPLICATIONS. BARCELONA, SEPT. 18 - 21, 1990, PROCEEDINGS OF THE EUROPEAN SIGNAL PROCESSING CONFERENCE, AMSTERDAM, ELSEVIER, NL, Bd. 2 CONF. 5, 18. September 1990 (1990-09-18), Seiten 801-804, XP000365714**

**Beschreibung**

Die Erfindung betrifft ein Verfahren und eine Anordnung zur Codierung bzw. Decodierung einer Folge von Bildern.

Ein Verfahren zur Bildkomprimierung mit dazugehöriger Anordnung ist bekannt aus [1]. Das bekannte Verfahren dient im MPEG-Standard als Codierverfahren und basiert im wesentlichen auf der hybriden DCT (Diskreten Cosinus Transformation) mit Bewegungskompensation. Ein ähnliches Verfahren wird für die Bildtelefonie mit n x 64kbit/s (CCITT-Empfehlung H. 261), für die TV-Kontribution (CCR-Empfehlung 723) mit 34 bzw. 45Mbit/s und für Multimedia-Applikationen mit 1,2Mbit/s (ISO-MPEG-1) verwendet. Die hybride DCT besteht aus einer zeitlichen Verarbeitungsstufe, die die Verwandtschaftsbeziehungen aufeinanderfolgender Bilder ausnutzt, und einer örtlichen Verarbeitungsstufe, die die Korrelation innerhalb eines Bildes ausnutzt.

Die örtliche Verarbeitung (Intraframe-Codierung) entspricht im wesentlichen der klassischen DCT-Codierung. Das Bild wird in Blöcke von 8x8 Bildpunkten zerlegt, die jeweils mittels DCT in den Frequenzbereich transformiert werden. Das Ergebnis ist eine Matrix von 8x8 Koeffizienten, die näherungsweise die zweidimensionalen Ortsfrequenzen im transformierten Bildblock widerspiegeln. Ein Koeffizient mit Frequenz 0 (Gleichanteil) stellt einen mittleren Grauwert des Bildblocks dar.

Nach der Transformation findet eine Datenexpansion statt. Allerdings wird in natürlichen Bildvorlagen eine Konzentration der Energie um den Gleichanteil (DC-Wert) stattfinden, während die höchstfrequenten Koeffizienten meist nahezu Null sind.

In einem nächsten Schritt erfolgt eine spektrale Gewichtung der Koeffizienten, so daß die Amplitudengenauigkeit der hochfrequenten Koeffizienten verringert wird. Hierbei nützt man die Eigenschaften des menschlichen Auges aus, das hohe Ortsfrequenzen weniger genau auflöst als niedrige.

Ein zweiter Schritt der Datenreduktion erfolgt in Form einer adaptiven Quantisierung, durch die die Amplitudengenauigkeit der Koeffizienten weiter verringert wird bzw. durch die die kleinen Amplituden zu Null gesetzt werden. Das Maß der Quantisierung hängt dabei vom Füllstand des Ausgangspuffers ab: Bei leerem Puffer erfolgt eine feine Quantisierung, so daß mehr Daten erzeugt werden, während bei vollem Puffer gröber quantisiert wird, wodurch sich die Datenmenge reduziert.

Nach der Quantisierung wird der Block diagonal abgetastet ("zigzag"-Scanning), anschließend erfolgt eine Entropiecodierung, die eine weitere Datenreduktion bewirkt. Hierfür werden zwei Effekte ausgenutzt:

    1.) Die Statistik der Amplitudenwerte (hohe Amplitudenwerte treten seltener auf als kleine, so daß den seltenen Ereignissen lange und den häufigen Ereignissen kurze Codewörter zugeordnet werden (Variable-Length-Codierung, VLC). Auf diese Weise ergibt sich im Mittel eine geringere Datenrate als bei einer Codierung mit fester Wortlänge. Die variable Rate der VLC wird anschließend im Pufferspeicher geglättet.

    2.) Man nutzt die Tatsache aus, daß von einem bestimmten Wert an in den meisten Fällen nur noch Nullen folgen. Statt aller dieser Nullen überträgt man lediglich einen EOB-Code (End Of Block), was zu einem signifikanten Codiergewinn bei der Kompression der Bilddaten führt. Statt der Ausgangsrate von bspw. 512bit sind dann nur 46bit für diesen Block zu übertragen, was einem Kompressionsfaktor von über 11 entspricht.

Einen weiteren Kompressionsgewinn erhält man durch die zeitliche Verarbeitung (Interframe-Codierung). Zur Codierung von Differenzbildern wird weniger Datenrate benötigt als für die Originalbilder, denn die Amplitudenwerte sind weitaus geringer.

Allerdings sind die zeitlichen Differenzen nur klein, wenn auch die Bewegungen im Bild gering sind. Sind hingegen die Bewegungen im Bild groß, so entstehen große Differenzen, die wiederum schwer zu codieren sind. Aus diesem Grund wird die Bild-zu-Bild-Bewegung gemessen (Bewegungsschätzung) und vor der Differenzbildung kompensiert (Bewegungskompensation). Dabei wird die Bewegungsinformation mit der Bildinformation übertragen, wobei üblicherweise nur ein Bewegungsvektor pro Makroblock (z.B. vier 8x8-Bildblöcke) verwendet wird.

Noch kleinere Amplitudenwerte der Differenzbilder werden erhalten, wenn statt der verwendeten Prädiktion eine bewegungskompensierte bidirektionale Prädiktion benutzt wird.

Bei einem bewegungskompensierten Hybridcoder wird nicht das Bildsignal selbst transformiert, sondern das zeitliche Differenzsignal. Aus diesem Grund verfügt der Coder auch über eine zeitliche Rekursionsschleife, denn der Prädiktor muß den Prädiktionswert aus den Werten der bereits übertragenen (codierten) Bilder berechnen. Eine identische zeitliche Rekursionsschleife befindet sich im Decoder, so daß Coder und Decoder völlig synchronisiert sind.

Im MPEG-2-Codierverfahren gibt es hauptsächlich drei verschiedene Methoden, mit denen Bilder verarbeitet werden können:

    I-Bilder: Bei den I-Bildern wird keine zeitliche Prädiktion verwendet, d.h., die Bildwerte werden direkt transformiert und codiert. I-Bilder werden verwendet, um den Decodiervorgang ohne Kenntnis der zeitlichen Vergangenheit neu beginnen zu können, bzw. um eine Resynchronisation bei Übertragungsfehlern zu erreichen.

P-Bilder: Anhand der P-Bilder wird eine zeitliche Prädiktion vorgenommen, die DCT wird auf den zeitlichen Prädiktionsfehler angewandt.

B-Bilder: Bei den B-Bildern wird der zeitliche bidirektionale Prädiktionsfehler berechnet und anschließend transformiert. Die bidirektionale Prädiktion arbeitet grundsätzlich adaptiv, d.h. es wird eine Vorwärtsprädiktion, eine Rückwärtsprädiktion oder eine Interpolation zugelassen.

Ein Bildsequenz wird bei der MPEG-2-Codierung in sog. GOPs (Group Of Pictures) eingeteilt. n Bilder von einem I-Bild zum nächsten bilden eine GOP. Der Abstand zwischen den P-Bildern wird mit m bezeichnet, wobei sich jeweils m-1 B-Bilder zwischen den P-Bildern befinden. Die MPEG-Syntax überläßt es jedoch dem Anwender, wie m und n gewählt werden. m=1 bedeutet, daß keine B-Bilder verwendet werden, und n=1 bedeutet, daß nur I-Bilder codiert werden.

Aus [2] ist ein Verfahren zur Bewegungsschätzung im Rahmen eines Verfahrens zur blockbasierten Bildcodierung bekannt. Dabei wird vorausgesetzt, daß ein digitalisiertes Bild Bildpunkte aufweist, die in Bildblöcken von insbesondere 8x8 Bildpunkten oder 16x16 Bildpunkten zusammengefaßt sind. Gegebenenfalls kann ein Bildblock auch mehrere Bildblöcke umfassen. Ein Beispiel hierfür stellt ein Makroblock mit 6 Bildblöcken dar, von denen 4 Bildblöcke für Helligkeitsinformation und 2 Bildblöcke für Farbinformation vorgesehen sind.
Bei einer Folge von Bildern wird für ein zu codierendes Bild unter Berücksichtigung der Bildblöcke dieses Bildes wie folgt verfahren:

- Es wird für den Bildblock, für den eine Bewegungsschätzung durchgeführt werden soll, in einem zeitlich vorhergehenden Bild, ausgehend von einem Bildblock, der sich in der gleichen relativen Position in dem vorhergehenden Bild befand (= vorangegangener Bildblock), ein Wert für ein Fehlermaß bestimmt. Dazu wird bevorzugt eine Summe über die Beträge der Differenzen von den Bildpunkten zugeordneter Codierungsinformation des Bildblocks und des vorangegangenen Bildblocks bestimmt. Unter Codierungsinformation ist hierbei eine Helligkeitsinformation (Luminanzwert) und/oder eine Farbinformation (Chrominanzwert) zu verstehen, welche jeweils einem Bildpunkt zugeordnet ist.
- In einem Suchraum vorgebbarer Größe und Form um die Ausgangsposition in dem zeitlich vorhergehenden Bild wird jeweils für ein Gebiet derselben Größe des vorangegangenen Bildblocks, verschoben um einen oder einen halben Bildpunkt, ein Wert des Fehlermaßes bestimmt.
- In einem Suchraum der Größe nxn-Bildpunkte ergeben sich $n^2$ (Fehler-)Werte. Es wird derjenige verschobene vorangegangene Bildblock in dem zeitlich vorhergehenden Bild ermittelt, für den das Fehlermaß einen minimalen Fehlerwert ergibt. Für diesen Bildblock wird angenommen, daß dieser vorangegangene Bildblock mit dem Bildblock des zu codierenden Bildes, für den die Bewegungsschätzung durchgeführt werden soll, am besten übereinstimmt.

- Das Ergebnis der Bewegungsschätzung ist ein Bewegungsvektor, mit dem die Verschiebung zwischen dem Bildblock in dem zu codierenden Bild und dem ausgewählten Bildblock in dem zeitlich vorhergehenden Bild beschrieben wird.
- Eine Kompression der Bilddaten wird dadurch erreicht, daß der Bewegungsvektor und das Fehlersignal codiert werden.
- Insbesondere wird die Bewegungsschätzung für jeden Bildblock eines Bildes durchgeführt.

Ein objektbasiertes Bildkompressionsverfahren basiert auf einer Zerlegung des Bildes in Objekte mit beliebiger Berandung. Die einzelnen Objekte werden in verschiedenen "Video Object Plans" getrennt voneinander codiert, übertragen und in einem Empfänger (Decoder) wieder zusammengesetzt. Wie oben beschrieben, wird bei herkömmlichen Codierverfahren das gesamte Bild in quadratische Bildblöcke unterteilt. Dieses Prinzip wird auch bei objektbasierten Verfahren übernommen, indem das zu codierende Objekt in quadratische Blöcke unterteilt und für jeden Block separat eine Bewegungsschätzung mit einer Bewegungskompensation durchgeführt wird.

Bei der Übertragung einer Folge von Bildern (Bilddaten) über einen gestörten Kommunikationskanal, insbesondere einen mobilen (Funk-)Kanal oder einen verlustbehafteten drahtgebundenen Kanal, können Teile der Bilddaten verloren gehen. Ein solcher Verlust der Bilddaten äußert sich in Form drastischer Qualitätseinbrüche in mehr oder weniger großen Bildbereichen. Da, wie oben beschrieben, bei Bildcodierung/Bilddecodierung Verfahren der Bewegungsschätzung mit Bewegungskompensation eingesetzt werden, verschwindet die Bildstörung auch dann nicht, wenn der Übertragungskanal wieder eine fehlerfreie Übertragung gewährleistet. Dies liegt daran, daß sich bei der Bewegungsschätzung insbesondere ein einmal auftretender Fehler bis zur Übertragung des nächsten Vollbildes (Intrabild) fortbesteht. Es erfolgt daher eine äußerst störende Fehlerfortpflanzung.

Videodatenkompressionsverfahren nach bekannten Standards H.261, H.263, MPEG-1/2/4 verwenden eine bewegungskompensierte Prädiktion (Bewegungsschätzung mit Fehlerkorrektur) und eine transformationsbasierte Restfehlercodierung, wobei bevorzugt die diskrete Cosinustransformation als Transformationscodierung eingesetzt wird. MPEG-2 enthält Vorschläge für eine skalierbare Codierung (hierarchische Codierung). Dabei wird ein Bild unterteilt in eine Basisinformation mit einer vorgegebenen Bildqualität und einer Zusatzinformation, die zur Herstellung einer vollständigen Bildqualität (ausreichende Bildqualität) zusätzlich codiert und übertragen wird. Bei Übertragungsfehlern im Bereich der Zusatzinformation ist immer noch sichergestellt, daß das jeweilige Bild in einer Qualität, die durch die Basisinformation hergestellt ist, rekonstruiert werden kann.

Aus WO-A-0 005 898 ist ein hierarchisches Codier-Verfahren bekannt. WO-A-9 853 613 zeigt ein skalierbares Verfahren.

Die Aufgabe der Erfindung besteht darin, eine Möglichkeit der fehlertoleranten Codierung einer Folge von Bildern anzugeben, wobei insbesondere eine möglichst effiziente Nutzung des gestörten Kanals hinsichtlich der Bildqualität der Folge von Bildern erreicht wird.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Verfahren zur Codierung einer Folge von Bildern angegeben, bei dem für die Folge von Bildern eine Basisinformation und eine Zusatzinformation bestimmt werden anhand der folgenden Schritte.

(1) Die Basisinformation wird anhand eines Verfahrens zur Quellencodierung ermittelt, wobei sich bei der Quellencodierung eine Restfehlerinformation zwischen der Folge von Bildern und einer codierten Folge von Bildern ergibt.

(2) Die Zusatzinformation zur graduellen Darstellung einer Restfehlerinformation wird erzeugt, indem die Restfehlerinformation in Frequenzbereiche unterteilt und graduell skaliert wird.

Es wird die Folge von Bildern anhand der Basisinformation und der Zusatzinformation codiert, wobei die Zusatzinformation eine progressive Verbesserung der Codierungsqualität gewährleistet.

Hierbei ist es besonders von Vorteil, dass ein bereits existierender Quellencodierer, also insbesondere ein System aus Transformation, Quantisierung und Entropiecodierung, eine gewisse Grundqualität der codierten Folge von Bildern gewährleistet. Darüber hinaus kann, vorzugsweise abhängig von der verbleibenden Bandbreite eines Übertragungskanals, eine Zusatzinformation übertragen werden, die eine allmähliche (progressive) Qualitätsverbesserung der Folge von Bildern gewährleistet. Hierbei wird insbesondere die Zusatzinformation so übertragen, dass im Hinblick auf eine Qualitätsverbesserung des einzelnen zu codierenden Bildes wesentliche Teile der Zusatzinformation zuerst übertragen werden. Weiterhin ist es von Vorteil, dass die Verbesserung der Qualität dieses Bildes gleichmäßig für das Bild erfolgt.

Eine Weiterbildung besteht darin, dass die Folge von Bildern als ein Bitstrom über einen Kanal zu einem Empfänger übertragen wird. Insbesondere kann der Kanal Störungen ausgesetzt sein, was dazu führt, daß auf dem Kanal seine eigentlich nutzbare Bandbreite während dieser Störungen nicht nutzbar ist. Hierbei ist zu erwähnen, dass die Quellencodierung die Basisinformation zur Verfügung stellt, die anhand der Zusatzinformation (graduell) erweitert wird und über den Kanal in Form eines Bitstroms zu dem Empfänger übertragen wird. Im Hinblick auf den Kanal ist es von Bedeutung, dass dieser abhängig von Störungen eine unter Umständen stark variierende Bandbreite aufweist. Die Störungen können nicht bzw. schlecht vorhergesagt werden, so dass Einbrüche in der Bandbreite des Kanals ohne Einsatz der Zusatzinformation dazu führen würde, dass die Folge von Bildern nicht mehr bzw. in deutlich verminderter Qualität von dem Empfänger erkennbar wäre. Insbesondere gewährleistet die auch für den fehlerbehafteten Kanal ausgelegte Basisinformation eine gewisse Grundqualität der codierten Folge von Bildern, deren Qualität anhand besagter Zusatzinformation (graduell) verbessert wird. Treten auf dem Kanal Störungen auf, so gehen Teile der Zusatzinformation verloren, was dazu führt, dass in den meisten Fällen immer noch eine graduelle Verbesserung gegenüber der durch die Basisinformation gewährleisteten Bildqualität sichergestellt ist. Dazu ist die Zusatzinformation vorzugsweise derart aufbereitet ist, dass zuerst die hinsichtlich einer möglichen Verbesserung des Bildes signifikante Information über den Kanal (in dem Bitstrom) übertragen wird.

Eine mögliche Anwendung besteht darin, dass auch bei einem stabilen, das heißt weitgehend ungestörten, Übertragungskanal von dem Empfänger die Folge von Bildern in unterschiedlicher Qualität abgerufen werden kann. Die Qualitätsskalierung erfolgt auf die oben beschriebene Art und Weise. Ein mögliches Einsatzfeld ist eine "Video-on-Demand"-Anwendung, die darauf basiert, dass der Benutzer eine von ihm vorgegebene Qualität empfangen will und auch nur für diese Qualität bezahlt.

Die Restfehlerinformation kann anhand von Differenzbildern im Bildbereich oder in einem Transformationsbereich bestimmt werden. Ein Beispiel für eine einen solchen Transformationsraum aufspannende Transformation ist die diskrete Cosinustransformation (DCT-Transformation). In diesem Transformationsraum kann die Differenz zwischen dem aktuellen transformierten Bild und dem zeitlich vorangegangenen rücktransformierten Bild der Folge von Bildern bestimmt werden. Hierbei bedeutet rücktransformiert insbesondere, dass nach der Quantisierung eine Dequantisierung des aktuellen Bildes erfolgt und man somit ein gegenüber dem aktuellen Bild verlustbehaftetes Bild erhält, das von dem aktuellen Bild um eine Restfehlerinformation abweicht. Wird das dequantisierte Bild auch noch einer inversen Transformation unterzogen, so erhält man das mit einem Restfehler behaftete Bild in dem nicht transformierten Bildbereich (Restfehlerinformation im Bildbereich).

Eine andere Weiterbildung besteht darin, dass das Verfahren zur Quellencodierung ein standardisiertes Bildcodierverfahren ist. Insbesondere kann es sich dabei um ein

Bildcodierverfahren nach einem MPEG-Standard oder nach einem H.26x-Standard handeln.

Eine zusätzliche Weiterbildung besteht darin, dass die Unterteilung in Frequenzbereiche derart durchgeführt wird, dass die Zusatzinformation für jedes Bild der Folge von Bildern ihrer Wichtigkeit nach übertragen wird.

Eine andere Ausgestaltung der Erfindung ist es, dass über eine vorgegebene Menge von Werten der Zusatzinformation iterativ für alle Werte dieser Menge jeweils die werthöchsten Bits in den Bitstrom eingespeist werden. Damit ist gewährleistet, dass zunächst in dem Bitstrom an den Empfänger die wichtigsten Bits übertragen werden. Somit stellt sich wiederum bei Abbruch des Bitstroms die für das jeweilige Bild übertragene Information in der für das Bild bestmöglichen Qualität dar. In besagter Iterationsschleife stellt ein nachfolgender Durchgang sicher, dass ein dem höchstwertigen Bit nachfolgendes Bit, das dann wiederum das höchstwertige noch nicht übertragene Bit ist, übertragen wird. Tritt jetzt eine Störung in dem Kanal auf, so ist sichergestellt, dass für die Menge von Werten, die zu übertragen sind, jeweils die signifikantesten ("besten") Bits übertragen wurden. Die restlichen Bits für eine Auflösung von n-Bits des Werts können dann mit Null aufgefüllt werden.

Hierbei sei angemerkt, dass im beschriebenen Szenario davon ausgegangen wird, dass die Folge von Bildern auf Seite eines Encoders codiert und über den beschriebenen Kanal zu einem Decoder übertragen wird. Der Decoder sorgt für die Wiederherstellung der Basisinformation und, soweit möglich, der Zusatzinformation und stellt insbesondere die erhaltene Folge von Bildern dar.

Hierbei ist sicherzustellen, dass der Decoder auf Empfängerseite weiß, wie mit der Zusatzinformation zu verfahren ist, das heißt inwiefern die Zusatzinformation zu verarbeiten ist, um eine Verbesserung der anhand der Basisinformation zur Verfügung gestellten Bildqualität zu erreichen ist. Somit stellt der Quellencodierer eine funktionale Basisschicht dar, die als Resultat eine Basisinformation liefert. Zu der Basisschicht gibt es eine Erweiterungsschicht, die einen zusätzlichen Dienst, nämlich die Verbesserung der Bildqualität für jedes einzelne insbesondere blockcodierte Bild anhand der Zusatzinformation erbringt. Über dieser Erweiterungsschicht oder als Teil derselben kann ferner eine Anwendung(sschicht) vorgesehen sein, die eine vorgegebene Qualität der Bilder explizit regelbar ausführt, bspw. bei o.g. Video-on-Demand-Applikation. So kann ein Benutzer auf Seite des Decoders innerhalb der Anwendung(sschicht) die für ihn geeignete Vorauswahl treffen; die zugehörige Qualität der Bilder wird durch Basis- und Erweiterungsschicht, also anhand der Basisund Zusatzinformation bereitgestellt. Somit kann ein Wahlmodus und ein daran geknüpfter Abrechnungsmodus für die genutzte Bandbreite der Video-on-Demand-Applikation bereitgestellt werden: Der Kunde zahlt die von ihm angeforderte Bandbreite; der Kanal stellt in diesem Szenario nicht die Engstelle des Systems dar.

Auch ist es eine Weiterbildung, dass bei der Ermittlung der Zusatzinformation die Basisinformation berücksichtigt wird.

Hierbei ist es insbesondere von Vorteil, dass in der Basisinformation bereits eine verlustbehaftete Bildcodierung vorgenommen wurde, die bestimmte Ergebnisse bereitstellt, die effizient in die Bestimmung der Zusatzinformation einfließen kann.

Insbesondere kann die Zusatzinformation im Rahmen einer Nachbearbeitung ("Post-Processing") dem Bitstrom beigefügt werden. Solch eine Nachbearbeitung hat u.a. den Vorteil, daß identifizierbar ist, welche Teile der Zusatzinformation welche Qualitätsverbesserungen bewirken und somit die hinsichtlich der Qualitätsverbesserungen signifikantesten Teile zuerst in den Bitstrom eingefügt werden können.

Ferner wird zur Lösung der Aufgabe ein Verfahren zur Decodierung einer Folge von Bildern angegeben, welche Folge von Bildern nach einem der oben beschriebenen Verfahren codiert wurde.

Auch wird zur Lösung der Aufgabe eine Anordnung zur Codierung einer Folge von Bildern angegeben, die eine Prozessoreinheit aufweist, die derart eingerichtet ist, dass

a) für die Folge von Bildern eine Basisinformation und eine Zusatzinformation bestimmt sind anhand der folgenden Schritte:

(1) die Basisinformation wird anhand eines Verfahrens zur Quellencodierung ermittelt, wobei sich bei der Quellencodierung eine Restfehlerinformation zwischen der Folge von Bildern und einer codierten Folge von Bildern ergibt;
(2) die Zusatzinformation zur graduellen Darstellung einer Restfehlerinformation wird erzeugt, indem die Restfehlerinformation in Frequenzbereiche unterteilt und graduell skaliert wird;

b) die Folge von Bildern anhand der Basisinformation und der Zusatzinformation codiert wird, wobei die Zusatzinformation eine progressive Verbesserung der Codierungsqualität gewährleistet.

Weiterhin wird zur Lösung der Aufgabe eine Anordnung zur Decodierung einer Folge von Bildern mit einer Prozessoreinheit, die derart eingerichtet ist, daß jedes Bild der Folge von Bildern anhand der Basisinformation und der Zusatzinformation wiederherstellbar ist.

Insbesondere ist diese Anordnung ein Decoder, der Basisinformation und Zusatzinformation geeignet auswertet. Ferner kann der Decoder eine bestimmten Dienst anfordern, der sich in Form unterschiedlicher Zusatzinformationen darstellt, bspw. Videoon-Demand in einer vorgegebenen Auflösung, die erst durch die Kombination von Basisinformation und Zusatzinformation erreicht wird.

Die Anordnungen sind insbesondere geeignet zur Durchführung des jeweiligen erfindungsgemäßen Verfahrens oder einer seiner vorstehend erläuterten Weiterbildungen.

Ausführungsbeispiele der Erfindung werden nachfolgend anhand der Zeichnungen dargestellt und erläutert.

Es zeigen

Fig.1 eine Skizze, die ein Verfahren zur Quellenkodierung veranschaulicht;

Fig.2 eine Skizze mit einer ersten Alternative zur Bestimmung einer Zusatzinformation;

Fig.3 eine Skizze mit einer zweiten Alternative zur Bestimmung einer Zusatzinformation;

Fig.4 eine Skizze, die eine Zusammenführung von Basisinformation und Zusatzinformation in einen Bitstrom und dessen Übertragung über einen Kanal darstellt;

Fig.5 eine Skizze, die eine Gruppierung von Frequenzen bzw. Koeffizienten darstellt;

Fig.6 eine Skizze zur Veranschaulichung der Bitebenen;

Fig.7 eine Skizze mit einem Bildcoder und einem Bilddecoder;

Fig.8 eine Prozessoreinheit.

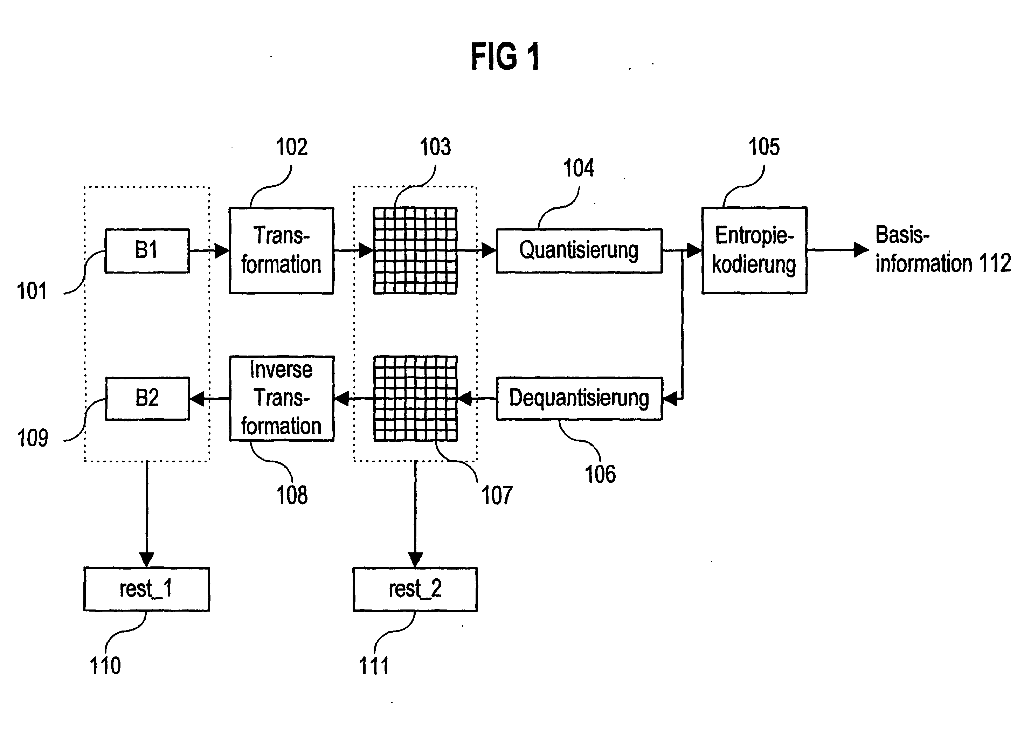

In **Fig.1** ist eine Skizze gezeigt, die ein Verfahren zur Quellencodierung veranschaulicht. Ein erstes vorzugsweise blockbasiertes Bild B1 101 wird einer Transformation 102 unterzogen. Ein Beispiel für solch eine Transformation ist eine diskrete Cosinustransformation (DCT-Transformation). Es ergeben sich die Koeffizienten der Transformation, dargestellt in Block 103. In einer Quantisierung 104 wird das Bild B1 101 verlustbehaftet abgebildet. Eine Entropiecodierung 105 liefert die Basisinformation 112. Das quantisierte verlustbehaftete Bild B1 101 wird dequantisiert (siehe Block 106), es ergeben sich die zugehörigen Transformationskoeffizienten 107, eine inverse Transformation 108 liefert ein zweites Bild B2 109, das gegenüber dem ersten Bild B1 101 eine Restfehlerinformation, d.h. eine verminderte Bildqualität, aufweist. Der Restfehler zwischen beiden Bildern B1 und B2 geht zurück auf den Quantisierungsfehler (siehe Block 104), der absichtlich in Kauf genommen wird, um innerhalb der Basisinformation eine Datenkomprimierung zu erhalten und die Basisinformation auch im Hinblick auf einen qualitativ schlechten Übertragungskanal derart bemessen zu können, dass die Übertragung sichergestellt ist. Insbesondere gibt es Basiskanäle von nur geringer Bandbreite, so daß eine hohe Datenreduktion Voraussetzung für die Übertragung einer Folge von Bildern ist.

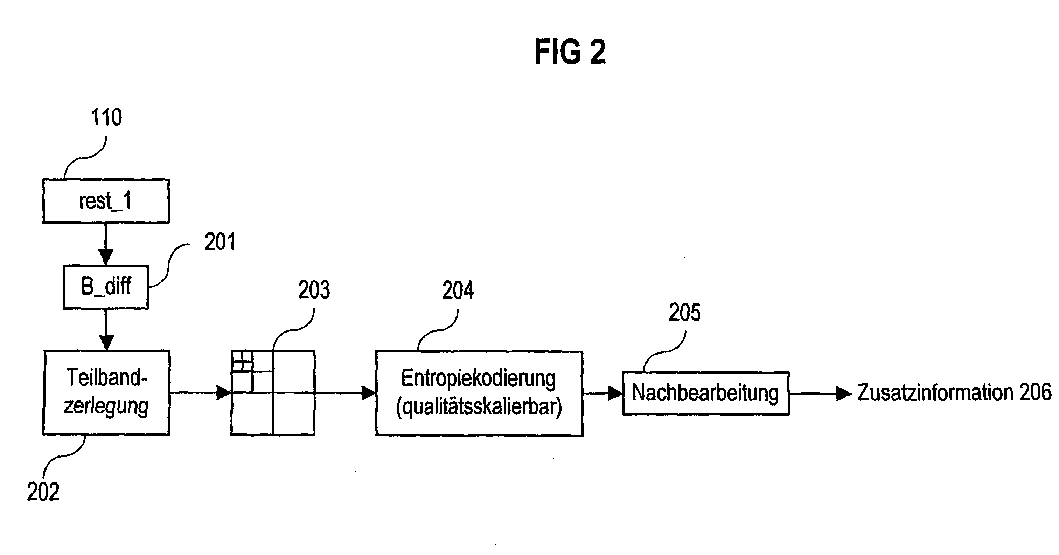

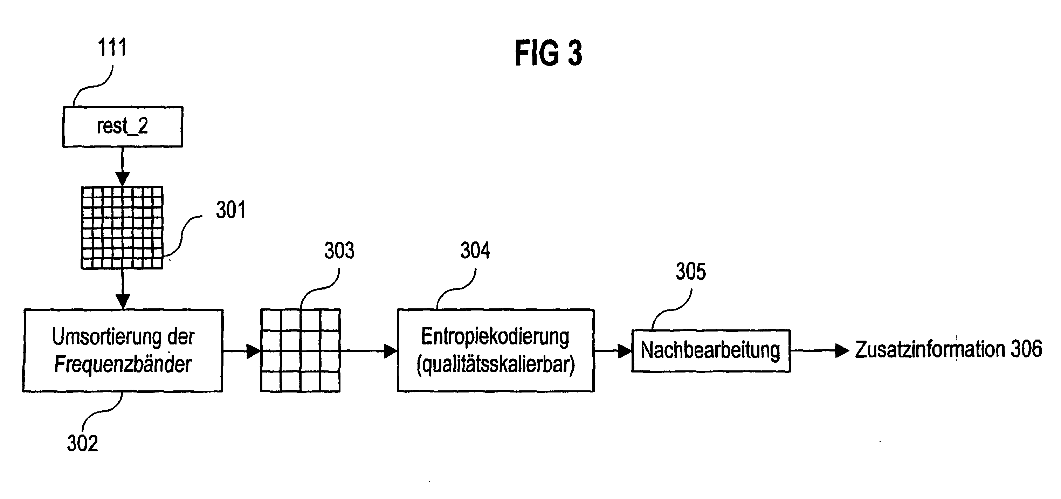

Weiterhin sind in Fig.1 eine erste Restfehlerinformation Rest_1 110 und eine zweite Restfehlerinformation rest_2 111 dargestellt. Beide Restfehlerinformationen werden in den Figuren 2 und 3 weiterverarbeitet zur Erzeugung jeweils einer Zusatzinformation 206 bzw. 306. Prinzipiell ermöglicht eine vollständige Codierung und Übertragung der Restfehlerinformation eine vollständige Rekonstruktion des Bildes B1 101 anhand der Basisinformation und der zu generierenden Zusatzinformation.

Fig.2 zeigt eine Skizze mit einer ersten Alternative zur Bestimmung einer Zusatzinformation. Die in Fig. 1 beschriebene erste Restfehlerinformation rest_1 110 wird gewonnen anhand der Differenz zwischen dem erstem Bild B1 und dem zweitem Bild B2 (siehe 101 und 109 in Fig.1). Es ergibt sich somit ein Differenzbild B_diff 201. Dieses Differenzbild B_diff 201 wird einer Teilbandzerlegung 202 zugeführt. Die Teilbandzerlegung 202 kann insbesondere bestehen aus einer Wavelet-Transformation bzw. einer Wavelet-Packet-Transformation. Es ergeben sich für das Differenzbild 201 getrennt jeweils Tiefpass- und Hochpass-Anteile bzw. Mischungen aus Tiefpass- und Hochpass-Anteilen. Diese gefilterten Informationen werden einer Entropiecodierung, die vorzugsweise qualitätsskalierbar ausgeführt ist (siehe Block 204), zugeführt. In einem Block 205 werden die Daten einer Nachbearbeitung unterzogen mit dem Ziel, eine größtmögliche Qualitätsverbesserung des nur aus der Basisinformation 112 bestehenden codierten Bildes B1 zu erreichen. Dies wird insbesondere dadurch erreicht, daß die Zusatzinformation derart bestimmt wird, daß anfänglich die größte Verbesserung bewirkt wird, wobei die Verbesserung selbst möglichst alle Blöcke des codierten Bildes gleichermaßen betrifft. Auf besondere Möglichkeiten der Nachbearbeitung zur Erreichung dieses Ziels wird in den nachfolgenden Ausführungen verwiesen.

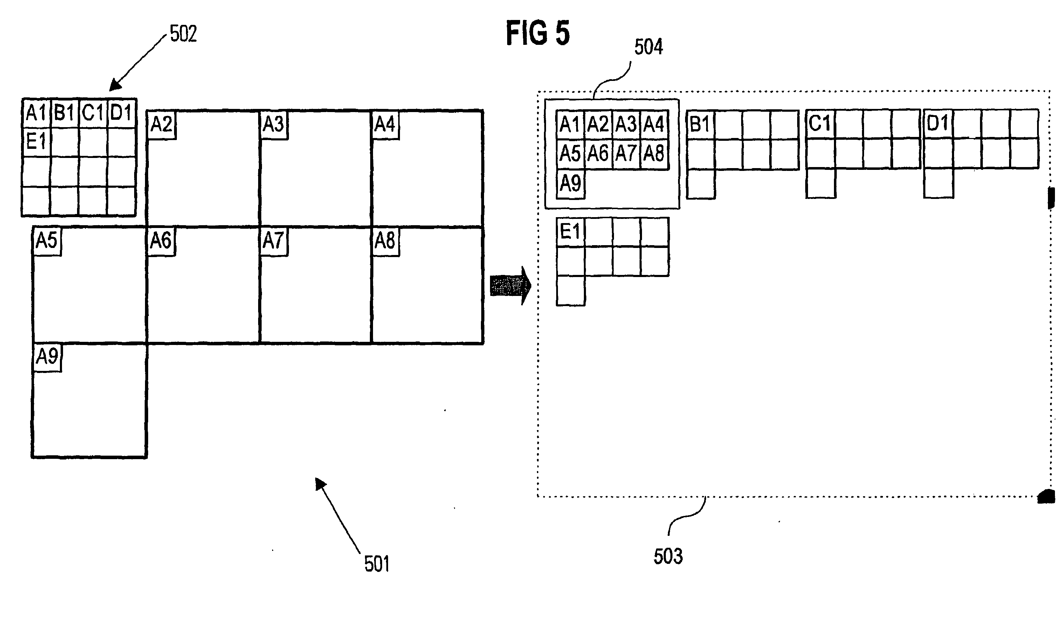

Eine andere Alternative zur Bestimmung der Zusatzinformation ist in **Fig.3** dargestellt. In Anlehnung an Fig.1 wird die Restfehlerinformation rest_2 111 aus der Differenz von erstem Bild B1 und zweitem Bild B2, jeweils im Transformationsraum (siehe 103 und 107 in Fig.1), bestimmt. Es ergibt sich ein Differenzbild 301 in dem Transformationsraum, das blockbasiert dargestellt ist, wobei für jeden Block bestimmte Frequenzanteile vorgegeben sind. Als Ergebnis einer DCT-Transformation gibt es einen Gleichanteil und eine Vielzahl von Wechselanteilen. In einem Schritt 302 erfolgt eine Umsortierung dieser Frequenzbänder derart, dass jeweils alle Gleichanteile bzw. alle Wechselanteile der jeweiligen Frequenzen zusammengefasst werden. Dies zeigt symbolisch Block 303, der die gleiche Information der Koeffizienten wie Block 301 enthält, allerdings sind die Koeffizienten für die jeweiligen Frequenzbereiche bzw. den Gleichanteil über alle Blöcke zusammengefasst. Dieser Mechanismus der Umsortierung wird auch in Fig. 5 erläutert. Nach der Umsortierung der Frequenzbänder erfolgt eine Entropiecodierung 304, die qualitätsskalierbar ausgeführt ist. Danach erfolgt eine Nachbearbeitung 305, so dass sich eine Zusatzinformation 306 ergibt, die derart ausgeführt ist, dass die hinsichtlich der Qualitätsverbesserung signifikanten Anteile zuerst über den Bitstrom übertragen werden.

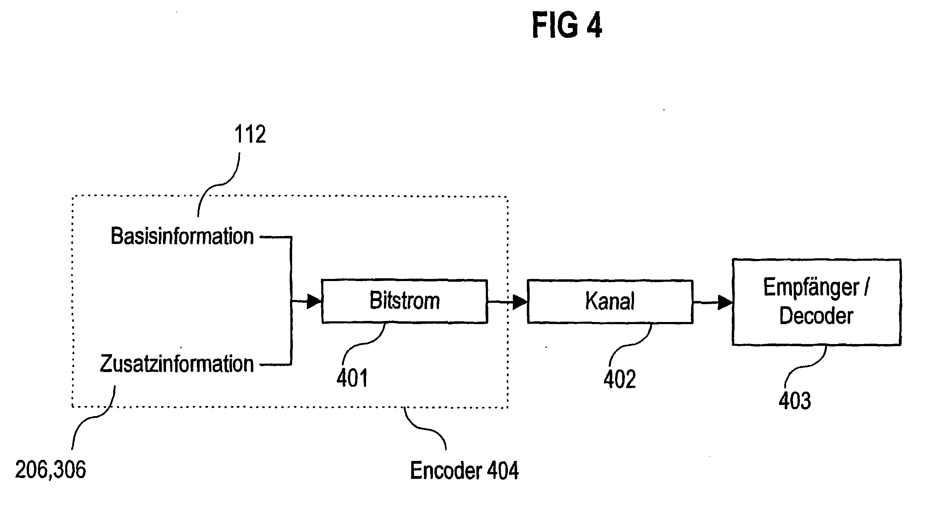

**Fig.4** zeigt eine Skizze, die eine Zusammenführung von der beschriebenen Basisinformation 112 und der Zusatzinformation (siehe 206 oder 306) in einen Bitstrom 401 darstellt. Diese Zusammenführung findet auf der Seite eines Encoders 404 statt. Der Bitstrom 401 wird über einen Kanal 402 an einen Empfänger bzw. Decoder 403 übertragen. Der Kanal hat eine vorgegebene Bandbreite, die unter Umständen gewissen Störeinflüssen unterliegt, so dass die Bandbreite selbst Schwankungen aufweisen kann. Nun ist es ein Ziel, die Bandbreite des Kanals möglichst effizient auszunutzen, so dass beim Empfänger eine Folge von Bildern in bestmöglicher Qualität dargestellt werden kann. Die Basisinformation 112 gewährleistet als Teil des Bitstroms 401 eine gewisse Grundqualität, die grundsätzlich über den Kanal beim Empfänger weitgehend ungestört ankommt und decodiert werden kann. Die sich daraus ergebende Qualität der Folge von Bildern ist verbesserungsfähig. Diese Qualitätsverbesserung wird durch die Zusatzinformation erreicht, die dem Bitstrom 401 beigefügt und ebenfalls über den Kanal 402 zu dem Empfänger bzw. Decoder 403 übertragen wird. Der Bitstrom stellt eine Folge von Bits dar, wobei grundsätzlich für jedes Bild ein bestimmtes Zeitfenster zur Verfügung steht. Schwankt jetzt die Bandbreite des Kanals innerhalb dieses Zeitfensters, ist es durchaus möglich, dass nicht alle Daten bei dem Empfänger ankommen, so dass sorgfältig zu wählen ist, welche Zusatzinformation in welcher Reihenfolge in den Bitstrom eingearbeitet wird. Aus diesem Grund ist, wie oben ausgeführt, die Zusatzinformation derart ausgestaltet, dass Teile, die eine große Verbesserung zu der Basisinformation beitragen, möglichst frühzeitig in den Bitstrom eingearbeitet werden. Weiterhin ist es ein besonderer Vorteil, wenn die Zusatzinformation, die für die Qualitätsverbesserung des Bildes zuständig ist, diese Qualitätsverbesserung gleichmäßig in dem gesamten Bild bewirkt. Dies wird dadurch sichergestellt, dass die signifikante Information, das heißt diejenigen Teile der Restfehlerinformation, die eine große Verbesserung ermöglichen, gleichmäßig über alle Blöcke des codierten Bildes in den Bitstrom eingearbeitet werden, so dass auf der Seite des Empfängers, je nachdem wie viel Zusatzinformation innerhalb besagten Zeitfensters übertragen werden konnte, eine gleichmäßige Verbesserung für alle Blöcke des Bildes erfolgt. Dazu wird bspw. die oben beschriebene Umsortierung der Frequenzbänder eingesetzt. So zielen die umsortierten Frequenzbänder gerade darauf ab, dass zuerst alle Blöcke des Bildes eine große Verbesserung erfahren und danach graduell die Qualität weiter verbessert wird. Reißt zwischendurch der Bitstrom der Zusatzinformation ab, so wurde bis dahin eine nahezu optimale Verbesserung des Bildes erreicht und damit die bereitgestellte Bandbreite effizient ausgenutzt.

**Fig.5** zeigt eine Skizze, die die oben beschriebene Gruppierung bzw. Umsortierung von Frequenzen (Koeffizienten) darstellt.

Ein Teil 501 zeigt einen Ausschnitt aus dem transformierten Bild (siehe 301 in Fig.3). Das Bild umfasst mehrere Bildblöcke, auch Macroblöcke, mit vorzugsweise 8x8 oder 16x16 Pixeln. Ein solcher Macroblock mit einer Größe von 4x4 Pixeln, hier Koeffizienten im Transformationsbereich, ist als Block 502 dargestellt. Der Block 502 umfasst mehrere Koeffizienten, ein Teil der Koeffizienten ist dargestellt als die Koeffizienten A1, B1, C1, D1, und E1. Ebenso wie der Macroblock 502 sind die nachfolgenden Macroblöcke in dem Bild 501 aufgebaut. Beispielhaft ist für jeden Macroblock der erste Koeffizient A2 bis A9 dargestellt. Vorzugsweise handelt es sich bei dem ersten Koeffizienten um den Gleichanteil, der hinsichtlich der Verbesserung des Bildes eine bedeutende Rolle spielt. Nach der Umsortierung ergibt sich eine Struktur wie im Block 503 dargestellt. Das transformierte Bild 301 bzw. 501 wird umsortiert derart, dass so viele Unterblöcke entstehen, wie es unterschiedliche Koeffizienten gibt. Beispielsweise ist in Block 503 ein Unterblock 504 mit allen Gleichanteilen aller Macroblöcke des transformierten Bildes 301 bzw. 501 enthalten. Die Gleichanteile in dem Block 504 sind dargestellt als Koeffizienten A1 bis A9. Analog sind alle jeweils gleichartigen Wechselanteile B bis E jeweils zusammengefasst.

Damit kann besonders vorteilhaft innerhalb der Zusatzinformation jeweils eine gleichmäßige Verbesserung für alle Macroblöcke erreicht werden. Nun soll als Teil der Zusatzinformation zumindest für alle Macroblöcke des Bildes der Gleichanteil, dargestellt als Block 504 in Fig.5, zu dem Empfänger übertragen werden. Dabei stellt sich wiederum die Frage, wie eine möglichst effiziente Verbesserung anhand der übertragenen Zusatzinformation erzielt werden kann. So ist es insbesondere von Nachteil, erst den Koeffizienten A1 in voller Auflösung, dann den Koeffizienten A2 in voller Auflösung und sofort zu übertragen. Vielmehr ist es vorteilhaft, einen signifikanten Anteil des Koeffizienten A1, dann den signifikanten Anteil des Koeffizienten A2 usf. zu übertragen. Somit kann sichergestellt werden, dass die Zusatzinformation effizient und frühzeitig für alle Koeffizienten A1 bis A9, also für alle in Frage kommenden Macroblöcke eine Verbesserung erreicht, wobei die Auflösung der Verbesserung selbst schrittweise nachgereicht werden kann. Die Auflösung der Verbesserung bezieht sich auf die Anzahl der Bits, die jeder Koeffizient aufweist.

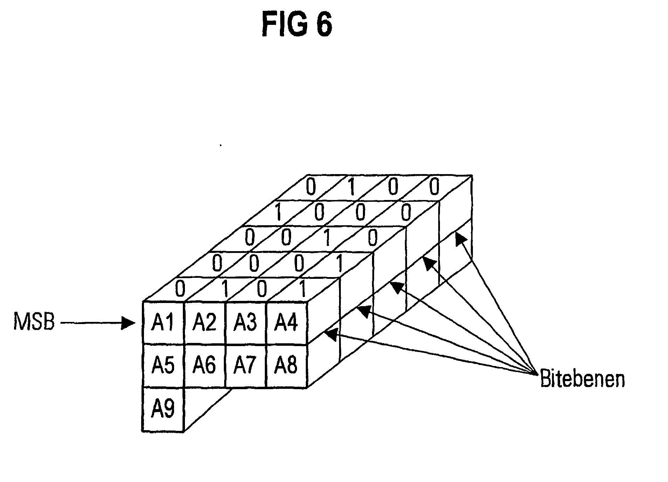

Dieser Zusammenhang ist in Fig.6 dargestellt.

**Fig.6** zeigt eine Skizze zur Veranschaulichung von Bitebenen. Dabei wird Bezug genommen auf den Unterblock 504 aus Fig.5 und die zugehörigen Erläuterungen. Wie beschrieben hat jeder Koeffizient A1 bis A9 eine Auflösung von n Bit. n ist im vorgegebenen Beispiel von Fig.6 gleich 6. Somit gibt es für jeden Koeffizienten ein Bit mit einer höchsten Wertigkeit (Most Significant Bit, MSB). Im Hinblick auf eine effiziente Ausnutzung der Zusatzinformation in dem Bitstrom ist es vorteilhaft, wenn zuerst für alle Koeffizienten A1 bis A9 das höchstwertige Bit übertragen wird. Danach wird das verbleibende höchstwertige Bit und so fort übertragen.

Hierbei sei angemerkt, dass die Koeffizienten A1 bis A9 lediglich einen Ausschnitt darstellen, anhand dessen die Vorgehensweise der effizienten Zusammenstellung der Zusatzinformation veranschaulicht werden soll.

Wird der Bitstrom innerhalb der zu übertragenden Zusatzinformation an einer bestimmten Stelle abgebrochen, so ist mit dem beschriebenen Mechanismus sichergestellt, dass die bereits übertragene Zusatzinformation das Bild auf Decoderseite effizient verbessert.

Eine Verfeinerung der beschriebenen Vorgehensweise besteht darin, dass, gerade innerhalb der Nachverarbeitung (siehe Blöcke 205 und 305) eine Vorbereitung der Zusatzinformation geschieht, die entsprechend ihrer Übertragungsreihenfolge am Anfang die größtmögliche Verbesserung des jeweiligen Bildes bewirkt. So kann beispielsweise eine Nachverarbeitung hinsichtlich einer RD-Optimierung ("Rate Distortion"-Optimierung) erfolgen, die darin besteht, dass die Zusatzinformation so umorganisiert wird, dass diejenigen Informationen zuerst in den Bitstrom gestellt werden, die eine größtmögliche Verbesserung bedingen, das heißt eine höchstmögliche Reduktion der Verzerrung bzw. des Restfehlers bewirken.

Weiterhin kann die Basisinformation zur Effizienzsteigerung eingesetzt werden. So kann beispielsweise aus der Verwendung unterschiedlicher Quantisierungsparameter in einer blockbasierten Basisschichtcodierung auf insignifikante Bereiche geschlossen werden, die bei der Codierung übersprungen werden können.

Nachfolgend wird die Nachverarbeitung beschrieben:

UMSORTIERUNG DES RESTFEHLERS BZW. DER RESTFEHLERINFORMATION IN DEN FREQUENZBEREICHEN (FREQUENZBÄNDERN):

Vor der eigentlichen Codierung der Restfehler erfolgt eine Umsortierung der Restfehlerinformation in Teilbänder jeweils gleicher Frequenz. Ausgehend von einer blockbasierten Transformation werden die (n, m) Transformationskoeffizienten des i-ten Block auf die i-te Stelle des (n, m) Frequenzbandes übertragen (siehe Fig.5).

BITEBENENZUWEISUNG:

Eine Möglichkeit der Restfehlerdarstellung besteht in der expliziten Zuweisung von Bitebenen für einen Koeffizienten in Abhängigkeit von der in der Basisschicht, also der die Basisinformation liefernden Quellencodierung, realisierten Quantisierung. Hierbei wird das entsprechende Quantisierungsintervall der Basisschicht mit seinen Rändern für die Weiterverarbeitung für die Zusatzinformation rekonstruiert. Die Bitebenen ergeben sich nun durch fortlaufende Zerlegung des betreffenden Intervalls in zwei Hälften. Befindet sich ein positiver Original-Koeffizient im linken bzw. rechten Teilintervall, so wird dem Restfehler in der aktuellen Bildebene eine Null bzw. eine Eins zugewiesen; für negative Koeffizienten gilt spiegelbildlich das Gleiche.

Die maximale Anzahl der Bitebenen, entsprechend der maximalen Anzahl von Intervallteilungen, wird dabei vorgegeben und die individuelle Anzahl der Bitebene ist dann abhängig von der jeweiligen Quantisierung in der Basisschicht. Koeffizienten mit einer groben Quantisierung in der Basisschicht erhalten mehr Bitebenen (entsprechend mehr Verfeinerungen als Koeffizienten mit einer bereits feinen Quantisierung. Das so gewonnene Wissen, wieviel Bits pro Koeffizient zu senden sind, kann auch eingesetzt werden, um Verfeinerungen später zu senden.

Das Konzept der Bitebenenzuweisung bewirkt bei Verwendung einer blockbasierten Transformation mit einer blockabhängigen (ortsabhängigen) Auswahl des Quantisierungsparameters in der Basisschicht, hervorgerufen beispielsweise durch eine Bitratenkontrolle, einen effizienten Ausgleich von Ungleichheiten innerhalb der Schicht zur Generierung der Zusatzinformation (Erweiterungsschicht). Schwanken die Quantisierungsparameter für die einzelnen Macroblöcke stark innerhalb eines Bildes, so werden diese Schwankungen mit jeder gesendeten Bitebene in der Erweiterungsschicht vermindert und streben so einer gleichmäßigen (unter Berücksichtigung der Basisinformation und der Zusatzinformation) Quantisierung zu, was sich in einer gleichmäßigen Qualität auf der Seite des Decoders wiederspiegelt.

Die Koeffizienten werden in Abhängigkeit der in der Erweiterungsschicht decodierten Information rekonstruiert. Ausgehend vom initialen Quantisierungsintervall der Basisschicht wird dieses Intervall so oft verfeinert, wie Bits für die Koeffizienten decodiert wurden. Anschließend folgt die Zuweisung eines Rekonstruktionswertes innerhalb des resultierenden Intervalls, beispielsweise durch den Intervallmittelpunkt.

Ein weiterer Vorteil der Darstellung des Restfehlers über die oben beschriebene Methode der Bitebenenzuweisung besteht darin, dass die Vorzeicheninformation nur für die Koeffizienten gesendet wird, die in der Erweiterungsschicht erstmalig signifikant werden.

RESTFEHLERDARSTELLUNG ÜBER REFERENZRESIDUEN:

Neben der expliziten Berechnung des Residuums zwischen Original und Rekonstruktion stellt die Differenzbildung zwischen einem (fiktiven) Referenzwert eines rekonstruierten Koeffizienten der Basisschicht und dem zugehörigen Original-Koeffizienten eine weitere Möglichkeit der Restfehlerdarstellung dar. Dabei bewirkt die Verwendung eines Referenzwertes, der bei positiven (negativen) Koeffizienten auf den linken (rechten) Rand des Quantisierungsintervalls der Basisschicht gesetzt wird, dass keine unnötige Vorzeicheninformation gesendet werden muss. Weiterhin sollte für jedes Teilband die Bitebene in der erstmalig ein Teilbandkoeffizient signifikant wird, identifiziert werden (Most Significant Bitplan), um ein unnötiges Codieren von Nullebenen zu vermeiden.

TEILBANDBASIERTE CODIERTECHNIKEN FÜR DIE ERWEITERUNGSSCHICHT

1. Signifikanz- bzw. Verfeinerungsinformation

Die Codierung unterscheidet für jeden Koeffizienten zwischen zwei Zuständen, dem Signifikanz- und Verfeinerungszustand. Dabei befindet sich ein Koeffizient solange in dem Signifikanzzustand, wie für ihn keine signifikante Information vorliegt, das heißt, bei einer Rekonstruktion würde der Koeffizient auf die Null abgebildet werden. Es wird auf das Anzeigen seiner Signifikanz gewartet, wobei ein Koeffizient signifikant in der k-ten Bitebene wird, wenn seine Amplitude a im Bereich

$$2^k \leq |a| < 2^{k+1}$$

liegt. Wird das erste Mal eine "1" gesendet, so ändert der Koeffizient nach der Codierung dieser "1" seinen Zustand, er geht über in den Verfeinerungszustand und alle folgenden Bits werden als Verfeinerungsbits bezeichnet.

Der aktuelle Zustand der Koeffizienten wird mit Hilfe einer binärwertigen Signifikanzmatrix beschrieben. Diese wird fortlaufend aktualisiert. Eine "1" in der Matrix indiziert, dass der Koeffizient bereits seine Signifikanz angezeigt hat und sich damit im Verfeinerungszustand befindet. Eine Null entspricht dem Signifikanzzustand, das heißt, für den Koeffizienten wird die Signifikanz noch erwartet.

Auf der Grundlage der Signifikanzmatrix wird die Entscheidung getroffen, in welchem Durchlauf (der fraktalen Bitebene) und mit welcher Routine ein aktuell zu codierendes Bit zu bearbeiten ist. Dabei wird die Signifikanzmatrix nach der Codierung eines Bits sofort aktualisiert.

Da es sich bei der Codierung in der Erweiterungsschicht um einen Restfehler handelt, ist es wichtig, so viel Information aus der Basisschicht wie möglich für die Zwecke der Codierung zu nutzen. So ist es beispielsweise sinnvoll, die Signifikanzmatrix zu Beginn der Codierung in der Erweiterungsschicht mit der Signifikanzinformation aus der Basisschicht zu initialisieren.

2. Codierwerkzeuge

In Abhängigkeit von der Umgebung eines Koeffizienten und seinem Zustand werden unterschiedliche Routinen zur Codierung des aktuellen Bits verwendet. Gemeinsam ist dabei allen Routinen die Verwendung einer adaptiven arithmetischen Codierung der binären Symbole, wobei eine Kontextbildung die Effizienz der Routinen in geeigneter Weise unterstützt.

**Signifikanzroutine:**

Die Codierung der Signifikanzinformation erfolgt mit einer Kontextbildung, in die die Signifikanzzustände aus der unmittelbaren Umgebung des jeweils aktuell zu koordinierenden Koeffizienten eingehen.

**Vorzeichenroutine:**

Bei der Codierung der Vorzeicheninformation werden Kontexte, bestehend aus der Vorzeicheninformation der unmittelbaren Umgebung des aktuell zu codierenden Koeffizienten verwendet. Diese Routine wird jedoch nur aufgerufen, wenn ein Koeffizient das erste Mal seine Signifikanz anzeigt.

**Routinen zum Zusammenfassen insignifikanter Nullen:**

Zur effizienten Codierung der Signifikanzinformation in signifikant gebliebener Nullen einer Bitebene können Nullräume (Zero-Trees) bzw. Lauflängen verwendet werden.

**Verfeinerungsroutine:**

Die Codierung von Verfeinerungsbits erfolgt in den oberen Bitebenen, also nach dem erstmaligen Auftreten der Signifikanz, mit einer Kontextbildung, in die die Signifikanzzustände benachbarter Koeffizienten eingehen; in den darunter liegenden Bitebenen wird nur noch ein adaptives Modell verwendet.

3. Konzept der fraktalen Bitebene

Konventionelle Bitebenencodierer codieren die Bits einer Bitebene nacheinander mit geeigneten Routinen in einem Durchlauf. Die Idee der fraktalen Bitebene besteht darin, in mehreren Durchläufen die aktuell zu codierende Bitebene abzutasten und die Bits entsprechend ihres Zustandes und ihrer Umgebung einer fraktalen Bitebene zuzuordnen.

Die zugrunde liegende Scanordnung innerhalb eines Bandes wird damit einer gewissen Wertigkeit (Priorität vor Lokalität) untergeordnet. Information, von der erwartet wird, dass sie im stärkeren Maße die RD-Funktion (RD = Rate Distortion) optimal beeinflusst, ist zuerst zu senden. Erst durch dieses Konzept ist es möglich, auch innerhalb einer Bitebene optimale RD-Abschneidestellen zu finden und damit die Granularität zu erhöhen.

Vorteilhaft sind mindestens drei Durchläufe pro Bitebene. Der erste Durchlauf einer Bitebene codiert Signifikanzinformation nur unter der Bedingung, dass sich der Koeffizient in einer signifikanten Umgebung befindet. Im zweiten Durchlauf wird die reine Verfeinerungsinformation codiert, während im dritten Durchgang die restliche, noch fehlende Signifikanzinformation codiert wird. Allen drei Durchläufen werden die jeweiligen Codierroutinen, wie sie oben beschrieben wurden, zugeordnet.

Alternativ können die letzten beiden Durchläufe auch in vertauschter Reihenfolge durchgeführt werden.

4. Abarbeitungsreihenfolge der einzelnen Teilbänder bzw. Komponenten

Ist keine Möglichkeit zu einer nachträglichen RD-Optimierung innerhalb der Nachbearbeitung 205 oder 305 vorgesehen, so ist es notwendig, eine Abarbeitungsreihenfolge der einzelnen Bänder bzw. Komponenten und damit die Position ihrer entsprechenden Anteil im Bitstrom festzulegen. Für die Bandanordnung ist der zigzag-Scan als geeignet anzusehen.

NACHTRÄGLICHE RATE-DISTORTION-OPTIMIERUNG (NACHBEARBEITUNG)

Ein weiteres Werkzeug zur Steigerung der Effizienz besteht in der nachträglichen Rate-Distortion-Optimierung. Nachträglich heißt in diesem Fall, dass nach der eigentlichen Codierung einzelne Codesegmente im Bitstrom neu arrangiert werden. Dieses Konzept setzt voraus, dass der Bitstrom in Codesegmente (durch eine unabhängige Codierung) zerlegbar ist und Information über das Rate-Distortion-Verhalten der einzelnen Segmente existiert. Hier beeinflusst die Größe der Codesegmente die Feinheit der Skalierbarkeit.

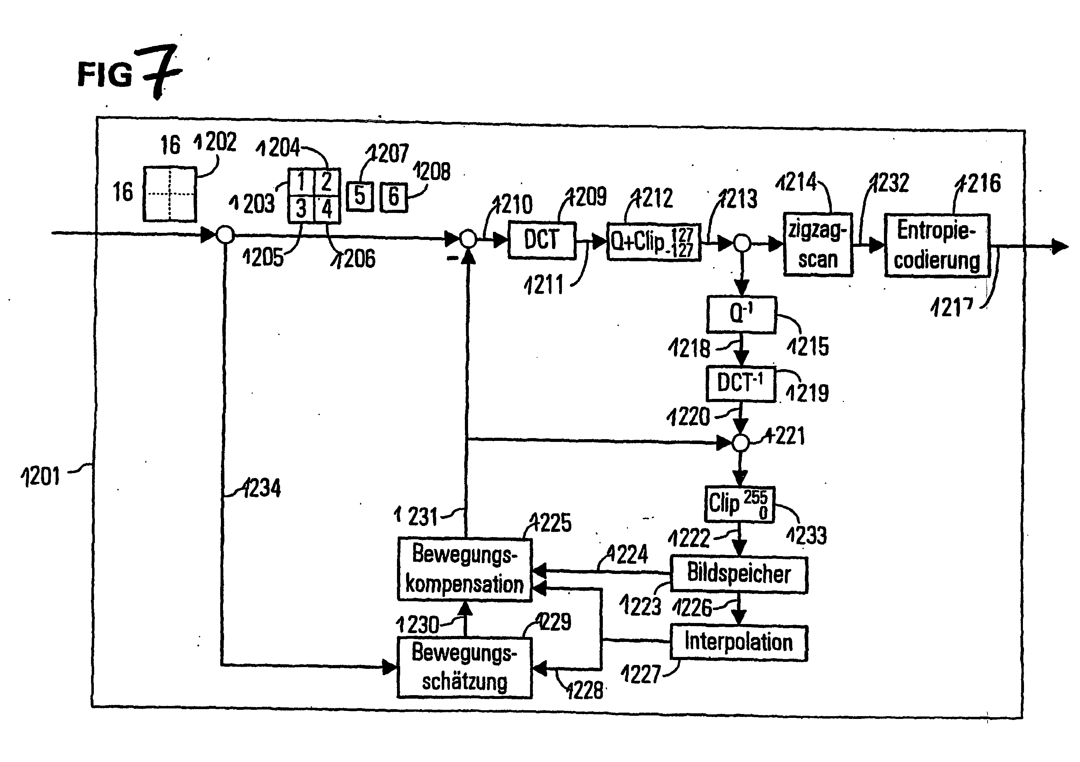

**Fig.7** zeigt eine Skizze einer Anordnung zur Durchführung eines blockbasierten Bildcodierverfahrens.

Ein zu codierender Videodatenstrom mit zeitlich aufeinanderfolgenden digitalisierten Bildern wird einer Bildcodierungseinheit 1201 zugeführt. Die digitalisierten Bilder sind unterteilt in Makroblöcke 1202, wobei jeder Makroblock 16x16 Bildpunkte hat. Der Makroblock 1202 umfaßt vier Bildblöcke 1203, 1204, 1205 und 1206, wobei jeder Bildblock 8x8 Bildpunkte, denen Luminanzwerte (Helligkeitswerte) zugeordnet sind, enthält. Weiterhin umfaßt jeder Makroblock 1202 zwei Chrominanzblöcke 1207 und 1208 mit den Bildpunkten zugeordneten Chrominanzwerten (Farbdifferenzwerte).

Alternativ können die Bildblöcke eine Größe von 4x4 Bildpunkten umfassen. Dementsprechend enthalten die Macroblöcke 16 Bildblöcke. Dies wird vorzugsweise eingesetzt im H.26L-Testmodell.

Die Bildblöcke werden einer Transformationscodierungseinheit 1209 zugeführt. Bei einer Differenzbildcodierung werden zu codierende Werte von Bildblöcken zeitlich vorangegangener Bilder von den aktuell zu codierenden Bildblöcken abgezogen, es wird nur die Differenzbildungsinformation 1210 der Transformationscodierungseinheit (Diskrete Cosinus Transformation, DCT) 1209 zugeführt. Dazu wird über eine Verbindung 1234 der aktuelle Makroblock 1202 einer Bewegungsschätzungseinheit 1229 mitgeteilt. In der Transformationscodierungseinheit 1209 werden für die zu codierenden Bildblöcke bzw. Differenzbildblöcke Spektralkoeffizienten 1211 gebildet und einer Quantisierungseinheit 1212 zugeführt.

Quantisierte Spektralkoeffizienten 1213 werden sowohl einer Scaneinheit 1214 als auch einer inversen Quantisierungseinheit 1215 in einem Rückwärtspfad zugeführt. Nach einem Scanverfahren, z.B. einem "zigzag"-Scanverfahren, wird auf den gescannten Spektralkoeffizienten 1232 eine Entropiecodierung in einer dafür vorgesehenen Entropiecodierungseinheit 1216 durchgeführt. Die entropiecodierten Spektralkoeffizienten werden als codierte Bilddaten 1217 über einen Kanal, vorzugsweise eine Leitung oder eine Funkstrecke, zu einem Decoder übertragen.

In der inversen Quantisierungseinheit 1215 erfolgt eine inverse Quantisierung der quantisierten Spektralkoeffizienten 1213. So gewonnene Spektralkoeffizienten 1218 werden einer inversen Transformationscodierungseinheit 1219 (Inverse Diskrete Cosinus Transformation, IDCT) zugeführt. Rekonstruierte Codierungswerte (auch Differenzcodierungswerte) 1220 werden im Differenzbildmodus einen Addierer 1221 zugeführt. Der Addierer 1221 erhält ferner Codierungswerte eines Bildblocks, die sich aus einem zeitlich vorangegangenen Bild nach einer bereits durchgeführten Bewegungskompensation ergeben. Mit dem Addierer 1221 werden rekonstruierte Bildblöcke 1222 gebildet und in einem Bildspeicher 1223 abgespeichert.

Chrominanzwerte 1224 der rekonstruierten Bildblöcke 1222 werden aus dem Bildspeicher 1223 einer Bewegungskompensationseinheit 1225 zugeführt. Für Helligkeitswerte 1226 erfolgt eine Interpolation in einer dafür vorgesehenen Interpolationseinheit 1227. Anhand der Interpolation wird die Anzahl in dem jeweiligen Bildblock enthaltener Helligkeitswerte vorzugsweise verdoppelt. Alle Helligkeitswerte 1228 werden sowohl der Bewegungskompensationseinheit 1225 als auch der Bewegungsschätzungseinheit 1229 zugeführt. Die Bewegungsschätzungseinheit 1229 erhält außerdem die Bildblöcke des jeweils zu codierenden Makroblocks (16x16 Bildpunkte) über die Verbindung 1234. In der Bewegungsschätzungseinheit 1229 erfolgt die Bewegungsschätzung unter Berücksichtigung der interpolierten Helligkeitswerte ("Bewegungsschätzung auf Halbpixelbasis"). Vorzugsweise werden bei der Bewegungsschätzung absolute Differenzen der einzelnen Helligkeitswerte in dem aktuell zu codierenden Makroblock 1202 und dem rekonstruierten Makroblock aus dem zeitlich vorangegangenen Bild ermittelt.

Das Ergebnis der Bewegungsschätzung ist ein Bewegungsvektor 1230, durch den eine örtliche Verschiebung des ausgewählten Makroblocks aus dem zeitlich vorangegangenen Bild zu dem zu codierenden Makroblock 1202 zum Ausdruck kommt.

Sowohl Helligkeitsinformation als auch Chrominanzinformation bezogen auf den durch die Bewegungsschätzungseinheit 1229 ermittelten Makroblock werden um den Bewegungsvektor 1230 verschoben und von den Codierungswerten des Makroblocks 1202 subtrahiert (siehe Datenpfad 1231).

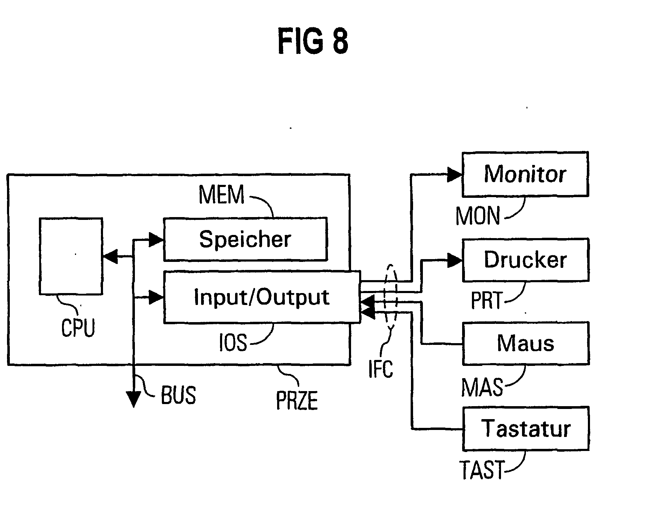

In **Fig.8** ist eine Prozessoreinheit PRZE dargestellt. Die Prozessoreinheit PRZE umfaßt einen Prozessor CPU, einen Speicher MEM und eine Input/Output-Schnittstelle IOS, die über ein Interface IFC auf unterschiedliche Art und Weise genutzt wird: Über eine Grafikschnittstelle wird eine Ausgabe auf einem Monitor MON sichtbar und/oder auf einem Drucker PRT ausgegeben. Eine Eingabe erfolgt über eine Maus MAS oder eine Tastatur TAST. Auch verfügt die Prozessoreinheit PRZE über einen Datenbus BUS, der die Verbindung von einem Speicher MEM, dem Prozessor CPU und der Input/Output-Schnittstelle IOS gewährleistet. Weiterhin sind an den Datenbus BUS zusätzliche Komponenten anschließbar, z.B. zusätzlicher Speicher, Datenspeicher (Festplatte) oder Scanner.

Literaturverzeichnis:

[1] J. De Lameillieure, R. Schäfer: "MPEG-2-Bildcodierung für das digitale Fernsehen", Fernseh- und Kino-Technik, 48.Jahrgang, Nr.3/1994, Seiten 99-107.

[2] M. Bierling: "Displacement Estimation by Hierarchical Blockmatching", SPIE, Vol.1001, Visual Communications and Image Processing '88, S. 942-951, 1988.

**Patentansprüche**

1. Verfahren zur Codierung einer Folge von Bildern,

a) bei dem für die Folge von Bildern eine Basisinformation und eine Zusatzinformation bestimmt werden anhand der folgenden Schritte:

(1) die Basisinformation für die Folge von Bildern wird anhand eines Verfahrens zur Quellencodierung, welches ein standardisiertes Bewegt-Bildcodierverfahren ist, ermittelt, wobei sich bei der Quellencodierung eine Restfehlerinformation zwischen der Folge von Bildern und einer codierten Folge von Bildern ergibt;
(2) die Zusatzinformation zur graduellen Darstellung einer Restfehlerinformation wird erzeugt, indem die Restfehlerinformation in Frequenzbereiche unterteilt und die Frequenzbereiche graduell skaliert werden;

b) bei dem die Folge von Bildern anhand der Basisinformation und der Zusatzinformation codiert wird, wobei die Zusatzinformation zur progressiven Verbesserung der Codierungsqualität verwendet wird.

2. Verfahren nach Anspruch 1, bei dem die Restfehlerinformation mittels einer Wavelet-Transformation oder einer Wavelet-Packet-Transformation in Frequenzbereiche unterteilt wird.

3. Verfahren nach Anspruch 1, bei dem die Restfehlerinformation derart in Frequenzbereiche unterteilt wird, dass jeweils alle Gleichanteile und alle Wechselanteile der jeweiligen Frequenzen zusammengefasst werden.

4. Verfahren nach einem der vorhergehenden Ansprüche,
bei dem die Folge von Bildern als ein Bitstrom über einen Kanal zu einem Empfänger übertragen wird.

5. Verfahren nach Anspruch 4,
bei dem der Kanal Störungen ausgesetzt ist.

6. Verfahren nach einem der vorhergehenden Ansprüche, bei dem die Restfehlerinformation aus einem Bild der Folge von Bildern und dem quantisierten Bild der Folge von Bildern in einem Bildbereich ermittelt wird.

7. Verfahren nach einem der vorhergehenden Ansprüche, bei dem die Restfehlerinformation aus einem Bild der Folge von Bildern und dem quantisierten Bild der Folge von Bildern in einem Transformationsbereich ermittelt wird.

8. Verfahren nach einem der vorhergehenden Ansprüche, bei dem das standardisierte Bildcodierverfahren ein Verfahren nach einem MPEG-Standard oder nach einem H.26x-Standard ist.

9. Verfahren nach Anspruch 4 oder einem der Ansprüche 5 bis 8, wenn abhängig von Anspruch 4,
bei dem die Unterteilung in Frequenzbereiche derart durchgeführt wird, daß die Zusatzinformation für jedes Bild der Folge von Bildern ihrer Wichtigkeit nach übertragen wird.

10. Verfahren nach Anspruch 4 oder einem der Ansprüche 5 bis 9, wenn abhängig von Anspruch 4,
bei dem über eine vorgegebene Menge von Werten der Zusatzinformation iterativ für alle Werte dieser Menge jeweils die werthöchsten Bits in den Bitstrom eingespeist werden.

11. Verfahren nach Anspruch 4 oder einem der Ansprüche 5 bis 10, wenn abhängig von Anspruch 4,
bei dem als Zusatzinformation die größte Restfehlerinformation zuerst übertragen wird.

12. Verfahren nach einem der vorhergehenden Ansprüche, bei dem bei der Ermittlung der Zusatzinformation die Basisinformation berücksichtigt wird.

13. Verfahren zur Decodierung einer Folge von Bildern, die nach einem der vorhergehenden Ansprüche codiert wurde, bei dem jedes Bild der Folge von Bildern anhand der Basisinformation und der Zusatzinformation wiederhergestellt wird.

14. Anordnung zur Codierung einer Folge von Bildern, bei der eine Prozessoreinheit vorgesehen ist, die derart eingerichtet ist, daß

a) für die Folge von Bildern eine Basisinformation und eine Zusatzinformation bestimmt sind anhand der folgenden Schritte:

(1)die Basisinformation für die Folge von Bildern wird anhand eines Verfahrens zur Quellencodierung, welches ein standardisiertes Bewegt-Bildcodierverfahren ist, ermittelt, wobei sich bei der Quellencodierung eine Restfehlerinformation zwischen der Folge von Bildern und einer codierten Folge von Bildern ergibt;
(2)die Zusatzinformation zur graduellen Darstellung einer Restfehlerinformation wird erzeugt, indem die Restfehlerinformation in Frequenzbereiche unterteilt und die Frequenzbereiche graduell skaliert werden;

b) die Folge von Bildern anhand der Basisinformation und der Zusatzinformation codiert wird, wobei die Zusatzinformation zur progressiven Verbesserung der Codierungsqualität verwendet wird.

15. Anordnung zur Decodierung einer Folge von Bildern, bei der eine Prozessoreinheit vorgesehen ist, die derart eingerichtet ist, daß jedes Bild einer gemäß einem Verfahren nach einem der Ansprüche 1 bis 13 codierten Folge von Bildern anhand der Basisinformation und der Zusatzinformation wiederherstellbar ist.

**Claims**

1. Method for coding a series of images,

a) with base information and additional information being determined for the series of images using the following steps:

(1)The base information for the series of images is determined using a method for source coding which is a standardized motion image coding method with residual error information being produced during the source coding, between the series of images and a coded series of images.
(2)The additional information is generated for the gradual representation of residual error information, while the residual error information is subdivided into frequency ranges and gradually scaled.

b) with the series of images being coded using the base information and the additional information, while the additional information is being used to progressively improve the coding quality.

2. Method according to Claim 1, with the residual error information being subdivided into frequency ranges by means of a wavelet transformation or a wavelet packet transformation.

3. Method according to Claim 1, with the residual error information being subdivided into frequency ranges of such a type that all the direct components and all the alternating components of the respective frequencies being combined in each case.

4. Method according to one of the preceding claims, with the series of images being transmitted to a receiver via a channel as a bitstream.

5. Method according to Claim 4,
with the channel being subject to interference.

6. Method according to one of the preceding claims, with the residual error information being determined from one image in the series of images and the quantized image in the series of images in an image area.

7. Method according to one of the preceding claims, with the residual error information being determined from one image in the series of images and the quantized image in the series of images in a transformation area.

8. Method according to one of the preceding claims, with the standardized image coding method being a method according to an MPEG standard or an H. 26x standard.

9. Method according to Claim 4 or one of the Claims 5 to 8, if these depend on Claim 4, with the subdivision of the frequency ranges being carried out in such a way that the additional information for each image in the series of images is transmitted according to its significance.

10. Method according to Claim 4 or one of the Claims 5 to 9, if these depend on Claim 4, with the most significant bits in each case being input into the bitstream iteratively for all the values in this set over a specified set of values of positional information.

11. Method according to Claim 4 or one of the Claims 5 to 10, if these depend on Claim 4, with as additional information the largest residual error information being transmitted first.

12. Method according to one of the preceding claims, with the base information being taken into account when determining the additional information.

13. Method for decoding a series of images which were coded according to one of the preceding claims, with each image in the series of images being restored using the base information and the additional information.

14. Arrangement for coding a series of images, with a processor unit being provided which is set up in such a way that

a) base information and additional information are determined for the series of images using the following steps:

(1)The base information for the series of images is determined using a method for source coding which is a standardized motion image coding method with residual error information being produced during the source coding, between the series of images and a coded series of images.
(2)The additional information is generated for the gradual representation of residual error information, while the residual error information is subdivided into frequency ranges and gradually scaled.

b) the series of images is coded using the base information and the additional information, while the additional information is being used to progressively improve the coding quality.

15. Arrangement for decoding a series of images, with a processor unit being provided which is set up in such a way that each image in the series of images coded according to a method according to one of the claims 1 to 13 can be restored using the base information and the additional information.

**Revendications**

1. Procédé de codage d'une suite d'images,

a) dans lequel une information de base et une information supplémentaire sont déterminées pour la suite d'images à l'aide des étapes suivantes:

(1) l'information de base pour la suite d'images est déterminée à l'aide d'un procédé de codage source, lequel est un procédé standardisé de codage d'images animées, une information d'erreur résiduelle entre la suite d'images et une suite codée d'images étant obtenue lors du codage source;
(2) l'information supplémentaire servant à la représentation graduelle d'une information d'erreur résiduelle est produite du fait que l'information d'erreur résiduelle est subdivisée en plages de fréquences et que les plages de fréquences sont scalées graduellement;

b) dans lequel la suite d'images est codée à l'aide de l'information de base et de l'information supplémentaire, l'information supplémentaire étant utilisée pour l'amélioration progressive de la qualité du codage.

2. Procédé selon la revendication 1, dans lequel l'information d'erreur résiduelle est subdivisée en plages de fréquences au moyen d'une transformation en ondelettes ou d'une transformation en paquet d'ondelettes.

**3.** Procédé selon la revendication 1, dans lequel l'information d'erreur résiduelle est subdivisée en plages de fréquences de manière telle que respectivement toutes les composantes DC et toutes les composantes AC des fréquences respectives sont regroupées.

**4.** Procédé selon l'une des revendications précédentes,
dans lequel la suite d'images est transmise en tant que train de bits à un récepteur sur un canal.

**5.** Procédé selon la revendication 4,
dans lequel le canal est exposé à des perturbations.

**6.** Procédé selon l'une des revendications précédentes,
dans lequel l'information d'erreur résiduelle est déterminée à partir d'une image de la suite d'images et de l'image quantifiée de la suite d'images dans une zone d'image.

**7.** Procédé selon l'une des revendications précédentes,
dans lequel l'information d'erreur résiduelle est déterminée à partir d'une image de la suite d'images et de l'image quantifiée de la suite d'images dans un domaine de transformation.

**8.** Procédé selon l'une des revendications précédentes,
dans lequel le procédé standardisé de codage d'images est un procédé répondant à un standard MPEG ou à un standard H.26x.

**9.** Procédé selon la revendication 4 ou l'une des revendications 5 à 8, si dépendantes de la revendication 4,
dans lequel la subdivision en plages de fréquences est effectuée de manière telle que l'information supplémentaire est transmise, pour chaque image de la suite d'images, selon son importance.

**10.** Procédé selon la revendication 4 ou l'une des revendications 5 à 9, si dépendantes de la revendication 4,
dans lequel respectivement les bits de valeur la plus élevée sont injectés dans le train de bits pour un ensemble donné de valeurs de l'information supplémentaire, itérativement pour toutes les valeurs de cet ensemble.

**11.** Procédé selon la revendication 4 ou l'une des revendications 5 à 10, si dépendantes de la revendication 4,
dans lequel la plus grande information d'erreur résiduelle est transmise en premier lieu en tant qu'information supplémentaire.

**12.** Procédé selon l'une des revendications précédentes,
dans lequel l'information de base est prise en compte lors de la détermination de l'information supplémentaire.

**13.** Procédé de décodage d'une suite d'images qui a été codée selon l'une des revendications précédentes, dans lequel chaque image de la suite d'images est reconstruite à l'aide de l'information de base et de l'information supplémentaire.

**14.** Agencement pour le codage d'une suite d'images, dans lequel est prévue une unité de processeur configurée de manière telle que

a) une information de base et une information supplémentaire sont déterminées pour la suite d'images à l'aide des étapes suivantes:

(1) l'information de base pour la suite d'images est déterminée à l'aide d'un procédé de codage source, lequel est un procédé standardisé de codage d'images animées, une information d'erreur résiduelle entre la suite d'images et une suite codée d'images étant obtenue lors du codage source;
(2) l'information supplémentaire servant à la représentation graduelle d'une information d'erreur résiduelle est produite du fait que l'information d'erreur résiduelle est subdivisée en plages de fréquences et que les plages de fréquences sont scalées graduellement;

b) la suite d'images est codée à l'aide de l'information de base et de l'information supplémentaire, l'information supplémentaire étant utilisée pour l'amélioration progressive de la qualité du codage.

**15.** Agencement pour le décodage d'une suite d'images, dans lequel est prévue une unité de processeur configurée de manière telle que chaque image d'une suite d'images codée selon un procédé selon l'une des revendications 1 à 13 peut être reconstruite à l'aide de l'information de base et de l'information supplémentaire.

# FIG 1

101 → B1 → Trans-formation (102) → [103] → Quantisierung (104) → Entropie-kodierung (105) → Basis-information 112

109 → B2 ← Inverse Trans-formation (108) ← [107] ← Dequantisierung (106)

B2 → rest_1 (110)

[107] → rest_2 (111)

EP 1 285 537 B1

FIG 2

EP 1 285 537 B1

**FIG 3**

111

rest_2

301

Umsortierung der
*Frequenzbänder*

303

304

Entropiekodierung
(qualitätsskalierbar)

305

Nachbearbeitung → Zusatzinformation 306

302

EP 1 285 537 B1

# FIG 4

FIG 5

# FIG 6

EP 1 285 537 B1

FIG 7

# FIG 8

EP 1 285 537 B1